Europäisches Patentamt

European Patent Office

Office européen des brevets

(11) Veröffentlichungsnummer: **0 324 375**
**A1**

## (12) EUROPÄISCHE PATENTANMELDUNG

(21) Anmeldenummer: 89100132.3

(22) Anmeldetag: 05.01.89

(51) Int. Cl.⁴: **B60H 3/02 , F25D 21/14**

(30) Priorität: 14.01.88 DE 3800826

(43) Veröffentlichungstag der Anmeldung:
**19.07.89 Patentblatt 89/29**

(84) Benannte Vertragsstaaten:
**ES FR GB IT SE**

(71) Anmelder: **BAYERISCHE MOTOREN WERKE**
**Aktiengesellschaft**
**Postfach 40 02 40 Petuelring 130 - AJ-30**
**D-8000 München 40(DE)**

(72) Erfinder: **Schlaudraff, Ernst**
**Paul-Gerhardt-Allee 25a**
**D-8000 München 60(DE)**

(74) Vertreter: **Bücken, Helmut et al**
**Bayerische Motoren Werke**
**Aktiengesellschaft Postfach 40 02 40**
**Petuelring 130 - AJ-30**
**D-8000 München 40(DE)**

(54) **Verdampfer einer Klimaanlage.**

(57) Ein Verdampfer (3) einer Fahrzeug-Klimaanlage
ist mit Abtropf-Rippen (24) versehen, um das sich
auf den Verdampfer-Lamellen (10) niederschlagende
Kondenswasser verbessert abzuführen. Diese
Abtropf-Rippen ragen dabei in eine Kondenswasser-
Auffangschale (21) und sind an einem grobmaschigen Netz (25) angebunden, welches auf die Unterseite (18) des Verdampfers (3) aufgelegt ist. Alternativ verläuft auf der Oberfläche des Verdampfers und
insbesondere wieder auf der Unterseite eine Dochtschnur, welche das sich ansammelnde Kondenswasser aufsaugt.

Fig. 2

EP 0 324 375 A1

## Verdampfer einer Klimaanlage.

Die Erfindung betrifft einen Verdampfer einer Klimaanlage, insbesondere für Fahrzeuge. Eine gattungsbildende Verdampferanordnung mit einer Auffangschale für das sich auf dem Verdampfer ansammelnde Kondenswasser ist in der DE-PS 34 36 539 beschrieben.

Es ist bekannt, daß sich am Verdampfer einer Klimaanlage bedingt durch die Abkühlung der den Verdampfer durchströmenden Umgebungsluft Kondenswasser bildet, welches dann zumeist in einer separaten Auffangschale gesammelt und von dieser in die Umgebung abgeführt wird. Die Auffangschalen werden dabei so gestaltet, daß sich auf dem in Strömungsrichtung hinter dem Verdampfer angeordneten Heizungswärmetauscher kein Kondenswasser niederschlagen kann, um ein Beschlagen beispielsweise der Fahrzeugscheiben, verursacht durch feuchtigkeitsübersättigte Klimatisierungsluft, zu verhindern.

Es hat sich gezeigt, daß ein derartiges Beschlagen der Fahrzeuginnenscheiben nicht nur durch auf dem Heizungswärmetauscher angelagertes Kondenswasser verursacht wird, sondern auch durch auf dem Verdampfer selbst verbleibende Restfeuchte. Diese Restfeuchte sammelt sich beispielsweise an, wenn das Fahrzeug nach Betreiben der Klimaanlage in einer relativ kalten Umgebung (beispielsweise in einer Tiefgarage) abgestellt wird.

Aufgabe der Erfindung ist es, Maßnahmen aufzuzeigen, mit Hilfe derer das sich auf dem Verdampfer ansammelnde Kondenswasser unter Zuhilfenahme einfacher Mittel verbessert abgeführt wird. Diese Aufgabe wird durch die kennzeichnenden Merkmale des ersten Patentanspruches gelöst. Vorteilhafte Ausund Weiterbildungen beschreiben die Unteransprüche.

Eine verbesserte Abfuhr von Kondenswasser an einem Verdampfer stellt sich unter Verwendung zumindest einer Abtropf-Rippe ein. Dabei steht der Begriff "Abtropf-Rippe" für sämtliche Ausbildungen, welche dazu geeignet sind, eine verbesserte Kapillarwirkung auf das zwischen den Verdampferlamellen befindliche Kondenswasser auszuüben und dieses abtropfen zu lassen. Dies bedeutet, daß die Abtropf-Rippe keineswegs rippenförmig gestaltet sein muß, vielmehr erfüllt auch eine beispielsweise stiftförmige oder bügelförmige Ausbildung den erfindungsgemäßen Zweck. Um ein sicheres Abtropfen zu gewährleisten, empfiehlt es sich jedoch, jene Abtropf-Rippe geodätisch nach unten gerichtet auszubilden. Mehrere jener Abtropf-Rippen erhöhen naturgemäß die erfindungsgemäße Wirkung.

Zwar ist aus der DE-AS 21 17 780 ein gasbeaufschlagter Wärmeübertrager bekannt geworden, welcher ebenfalls geodätisch nach unten gerichtete Abtropf-Rippen aufweist. Da jene Rippen aber aus dem Gehäuse des Verdampfers herausgearbeitet sind, ist jene Lösung äußerst aufwendig und muß insbesondere beim Einbau in Fahrzeugen den jeweiligen geometrischen Verhältnissen optimal angepaßt sein, so daß bei Verwendung in unterschiedlichen Fahrzeugtypen trotz gleicher Wärmetauscher-Kenn zahlen (beispielsweise Blocktiefe oder Rippenzahl) verschiedenartige Verdampfer vorgesehen werden müssen. Deshalb schlägt der Anspruch vor, die Abtropf-Rippe(n) als eigenständiges Bauteil am Verdampfer anzuordnen. Neben separat angebundenen Abtropf-Rippen, welche beispielsweise in Form von Drahtbügeln ausgebildet sein können, kann in einer vorteilhaften Ausgestaltung auch ein grobmaschiges Netz, welches mit Abtropf-Rippen versehen ist, auf die Oberfläche des Verdampfer-Blockes aufgelegt sein.

Besonders vorteilhaft ist es, die Abtropf-Rippe mit der zumeist unterhalb des Verdampfers angeordneten Auffangschale für das Kondenswasser zu verbinden. In diesem Falle ist auch bei ungünstig breiten und gerade ausgebildeten Verdampfer-Unterseiten einerseits eine ausreichende Gehäuseaufstandsfläche gegeben, andererseits ist die flächige Ausführung aufgrund der vielen Längsrippen in der Lage, das Wasser aus den Lamellen zu ziehen und abzuleiten.

Eine weitere Verbesserung erzielt man, wenn gemäß Anspruch 4 auf der Verdampferoberfläche eine mit ihrem Ende geodätisch nach unten gerichtete Dochtschnur, welche als Abtropf-Rippe fungiert, vorgesehen ist. Beispielsweise kann diese Dochtschnur meanderförmig auf der Verdampferoberfläche verlaufen und mit ihrem Ende in die Kondenswasser-Auffangschale hineinragen. Ebenso kann jene Dochtschnur schienen- oder netzförmig auf der Verdampfer-Unterseite verlaufen, wobei deren freie Enden als geodätisch nach unten gerichtete Abtropf-Rippen ausgebildet sein können. Die dochtartige Ausbildung bewirkt dabei, daß das Kondenswasser von der Sammelvorrichtung sozusagen aufgesogen wird.

Im folgenden wird die Erfindung anhand mehrerer, nur schematisch gezeigter Ausführungsbeispiele näher beschrieben. Es zeigt:

Fig. 1 die Prinzipskizze einer Fahrzeug-Klimaanlage mit einem Verdampfer

Fig. 2 einen Verdampfer mit aufgesetzten Abtropf-Rippen,

Fig. 3 eine andere Ausbildung derartiger Abtropf-Rippen, sowie

Fig. 4 einen Verdampfer mit aufgelegter Dochtschnur.

Ein Kraftfahrzeug 1 ist mit einer Klimaanlage zur Klimatisierung des KFZ-Innenraumes 2 versehen. Wesentlicher Bestandteil dieser Klimaanlage ist ein Verdampfer 3, in welchem der in den Innenraum 2 gelangende Luftstrom abgekühlt wird. Zur Führung des Luftstromes ist ein Luftleitkanal 4 vorgesehen, welcher eine Lufteintrittsöffnung 5 sowie mehrere Luftaustrittsöffnungen 6 aufweist, und innerhalb dessen neben einem nicht gezeigten Heizungs-Wärmetauscher ein schematisiert dargestelltes Gebläse 7 vorgesehen ist. Begrenzt wird der Luftleitkanal von Wandungen 8, 9.

Der Verdampfer 3 besteht im wesentlichen aus einer Vielzahl nebeneinander angeordneter Lamellen 10, welche von das Kältemittel führenden Rohren 11 durchdrungen werden. Zur Förderung und Verdichtung des Kältemittels ist ein Klimaanlagen-Kompressor 12 vorgesehen, welcher von einer das Kraftfahrzeug 1 antreibenden Brennkraftmaschine 13 angetrieben wird. Rohrleitungen 14 führen das Kältemittel in einem geschlossenen Kreislauf zu einem Kondensator 15 und von diesem aus zum Verdampfer 3.

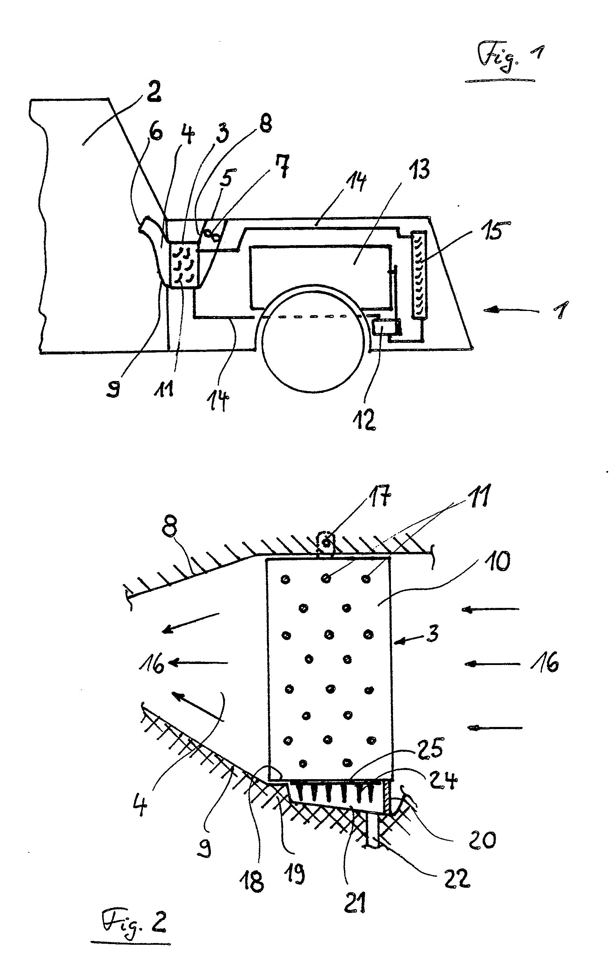

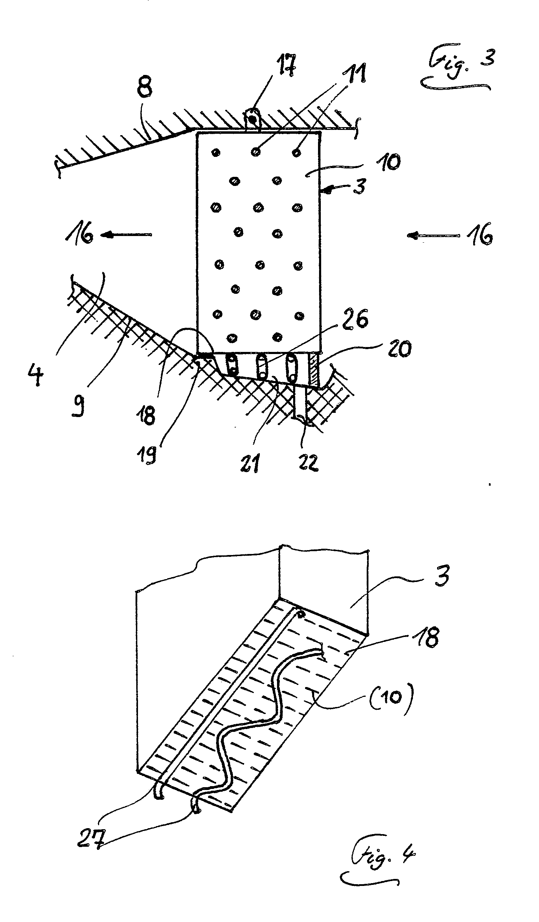

Der zwischen den Verdampferlamellen gemäß Pfeilrichtung 16 hindurchströmende Luftstrom wird von den ihrerseits durch das Kältemittel gekühlten Verdampferlamellen abgekühlt. Dabei schlägt sich ein Teil der stets in der Luft enthaltenen Feuchtigkeit als Kondensat am Verdampfer 3 und insbesondere an den Verdampfer-Lamellen 10 nieder. Um dieses Kondenswasser wirkungsvoll und einfach abzuführen, sind erfindungsgemäß verschiedene Maßnahmen vorgesehen. Diese sind in den Fig. 2 bis 4 näher dargestellt, wobei die Fig. 2, 3 in einem Querschnitt durch den Verdampfer die seitliche Aufsicht auf eine Lamelle 10 zeigen.

Dargestellt sind desweiteren die Wandungen 8, 9 des Luftleitkanales 4, sowie die Aufhängung des Verdampfers 3 innerhalb dieses Luftleitkanales. Mittels einer Befestigungslasche 17 ist der Verdampfer 3 an der oberen Wandung 8 angebunden, während er sich mit seiner Unterseite 18 auf einem Absatz 19 der Wandung 9 abstützt. Vorgesehen ist desweiteren eine Lagerleiste 20, auf welcher sich ebenfalls der Verdampfer 3 abstützt und welche ihrerseits auf der Wandung 9 aufliegt. Diese Lagerleiste 20 erstreckt sich dabei über die gesamte Breite des Verdampfers 3 und verhindert somit vorteilhafterweise ein Umströmen des Verdampfers 3 durch den Luftstrom 16. In diesem Bereich ist die Wandung 9 wannenförmig geformt und bildet somit eine Kondenswasser-Auffangschale 21. Vorgesehen ist desweiteren eine Ablauföffnung 22 für das sich in der Auffangschale 21 sammelnde Kondenswasser.

Nach Fig. 2 sind Abtropf-Rippen 24 vorgesehen, welche eine Kapillarwirkung auf das zwischen den Verdampferlamellen 10 befindliche Wasser ausüben und damit dieses in die Auffangschale 21 abtropfen lassen. Dazu ist ein grobmaschiges Netz 25, welches mit derartigen Abtropf-Rippen 24 versehen ist, auf die Unterseite 18 des Verdampfers 3 aufgebracht. Die Abtropf-Rippen 24 können dabei als einfache dreieckförmige Plättchen oder als sich über die gesamte Breite des Verdampfers erstreckende Stege von ebenfalls vorzugsweise dreieckigem Querschnitt ausgebildet sein. Das grobmaschige Netz 25 kann dabei in Metall oder Textil ausgeführt sein und ermöglicht eine optimale Anpassung an die jeweiligen geometrischen Verhältnisse. Die Anbindung des Netzes 25 kann dabei durch Kleben, Löten, Clipsen oder auf ähnliche Weise erfolgen.

Alternativ ist es aber auch möglich, diese Abtropf-Rippen als Drahtbügel 26 auszubilden, wie dies Fig. 3 zeigt. Diese Drahtbügel 26 verlaufen dabei über die gesamte Breite des Verdampferblockes und wirken als Tropfenfänger bzw. ebenfalls als Abtropf-Rippen. In dem hier gezeigten Ausführungsbeispiel stellen diese Drahtbügel 26 zudem eine Verbindung her zwischen dem Verdampfer 3 sowie der nur bruchstückhaft gezeigten Kondenswasser-Auffangschale 21.

In der perspektivisch aufgebrochenen Darstellung von Fig. 4 ist auf der Unterseite 18 des Verdampfers 3 eine sammelschienenförmig angeordnete Dochtschnur 27 vorgesehen. Diese Dochtschnur 27 saugt sich ansammelndes Kondenswasser förmlich auf und leitet dieses über ihre freien Enden, welche wiederum als Abtropf-Rippen bezeichnet werden können, beispielsweise in die Ablauföffnung 27 der Kondenswasser-Auffangschale 21.

Die gezeigten Ausführungsbeispiele stellen lediglich bevorzugte Ausführungsvarianten für die vorliegende Erfindung dar. Darüber hinaus sind auch noch andere Ausbildungen denkbar, welche unter den allgemeinen Erfindungsgedanken fallen, wonach das sich auf einem Verdampfer einer Klimaanlage ansammelnde Kondenswasser verbessert abgeführt wird.

## Ansprüche

1. Verdampfer einer Klimaanlage, insbesondere für Fahrzeuge, mit zumindest einer von der Verdampfer-Oberfläche geodätisch nach unten gerichteten Abtropf-Rippe,
dadurch gekennzeichnet, daß die Abtropf-Rippe (24) als eigenständiges Bauteil am Verdampfer angeordnet ist.

2. Verdampfer nach Anspruch 1, mit einer Auffangschale für das Kondenswasser, dadurch gekennzeichnet, daß die Abtropf-Rippe mit der Auffangschale (21) verbunden ist.

3. Verdampfer nach Anspruch 1 oder 2, dadurch gekennzeichnet, daß die Abtropf-Rippe als eine auf der Verdampfer-Oberfläche und/oder -Unterseite (18) angeordnete, mit ihrem Ende geodätisch nach unten gerichtete Dochtschnur (27) ausgebildet ist.

4. Verdampfer nach einem der vorangegangenen Ansprüche, dadurch gekennzeichnet, daß Abtropf-Rippen (24) an einem auf die Verdampfer-Unterseite (18) aufgelegten Netz (25) angebunden sind.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 7, Nr. 20 (M-188)[1165], 26. Januar 1983; & JP-A-57 175 421 (HITACHI SEISAKUSHO K.K.) 28-10-1982 | 1,2 | B 60 H 3/02 F 25 D 21/14 |
| X | US-A-3 306 071 (E.F. HOLYFIELD) * Spalte 3, Zeilen 15-30; Ansprüche 1-4,6; Figuren 2,6 * | 1 | |
| X | FR-A-2 084 500 (VEB KOMBINAT LUFT- UND KÄLTETECHNIK) * Ansprüche 1-5; Figuren 1-5 * | 1-3 | |
| X A | US-A-3 691 786 (R.M. ANDERSON) * Ansprüche 1,6,8; Figur 2 * | 1,2 4 | |
| A | US-A-1 488 771 (R.A. AINSA) * Anspruch 1; Figuren 1,4,5 * | 3,4 | |
| A | US-A-2 667 041 (R.M. HEUDERSON) * Ansprüche 1-4; Figuren 1-6 * | 1 | RECHERCHIERTE SACHGEBIETE (Int. Cl.4) B 60 H F 25 D F 24 F F 28 B |

Der vorliegende Recherchenbericht wurde für alle Patentansprüche erstellt

| Recherchenort | Abschlußdatum der Recherche | Prüfer |
|---|---|---|
| DEN HAAG | 17-04-1989 | SINGER G.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................................
& : Mitglied der gleichen Patentfamilie, übereinstimmendes Dokument

EPO FORM 1503 03.82 (P0403)